# EUROPÄISCHE PATENTSCHRIFT

(11) **EP 4 327 120 B1**
(45) Veröffentlichungstag und Bekanntmachung des Hinweises auf die Patenterteilung: **09.09.2026**
(21) Anmeldenummer: 22723632.0
(22) Anmeldetag: 20.04.2022
(51) Int. Cl.: G01S 7/481, G01S 7/484, G01S 17/93, G01S 7/48

(54) **SENDEEINRICHTUNG MIT STRAHLVERSCHIEBER FÜR EINE DETEKTIONSVORRICHTUNG ZUR ERFASSUNG VON OBJEKTEN, ENTSPRECHENDE DETEKTIONSVORRICHTUNG UND FAHRZEUG, SOWIE VERFAHREN ZUM BETREIBEN EINER SENDEEINRICHTUNG**
TRANSMISSION DEVICE WITH BEAM DISPLACING DEVICE FOR A DETECTION DEVICE FOR DETECTING OBJECTS, CORRESPONDING DETECTION DEVICE, VEHICLE, AND METHOD FOR OPERATING A TRANSMISSION DEVICE
DISPOSITIF D'ÉMISSION À DISPOSITIF DE DÉPLACEMENT DE FAISCEAU POUR UN DISPOSITIF DE DÉTECTION DESTINÉ À LA DÉTECTION D'OBJETS, DISPOSITIF DE DÉTECTION CORRESPONDANT ET VÉHICULE, AINSI QUE PROCÉDÉ POUR FAIRE FONCTIONNER UN DISPOSITIF D'ÉMISSION

(30) Priorität: 22.04.2021 DE 102021110294
(43) Veröffentlichungstag der Anmeldung: 28.02.2024
(73) Patentinhaber: Valeo Schalter und Sensoren GmbH, 74321 Bietigheim-Bissingen (DE)
(72) Erfinder: SIMON, Jan Christoph, 74321 Bietigheim-Bissingen (DE); BERTSCHINGER, Bernd, 74321 Bietigheim-Bissingen (DE)
(74) Vertreter: Pothmann, Karsten
(86) Internationale Anmeldenummer: PCT/EP2022/060363
(87) Internationale Veröffentlichungsnummer: WO 2022/223582

(56) Entgegenhaltungen:
- US-A- 5 157 257
- US-A1- 2020 333 461

## Beschreibung

### Technisches Gebiet

Die Erfindung betrifft eine Sendeeinrichtung einer Detektionsvorrichtung zur Erfassung von Objekten mittels elektromagnetischer Abtastsignale, mit wenigstens einer Signalquelle zur Erzeugung von elektromagnetischen Abtastsignalen und mit wenigstens einem Strahlverschieber zum Verschieben von Signalpfaden von elektromagnetischen Abtastsignalen.

Ferner betrifft die Erfindung eine Detektionsvorrichtung zur Erfassung von Objekten mittels elektromagnetischer Abtastsignale,
mit wenigstens einer Sendeeinrichtung, welche wenigstens eine Signalquelle zur Erzeugung von elektromagnetischen Abtastsignalen und wenigstens einen Strahlverschieber zum Verschieben von Signalpfaden von elektromagnetischen Abtastsignalen aufweist,
und mit wenigstens einer Empfangseinrichtung zum empfangen von elektromagnetischen Echosignalen, welche von elektromagnetischen Abtastsignalen herrühren, die an Objekten reflektiert werden.

Außerdem betrifft die Erfindung ein Fahrzeug mit wenigstens einer Detektionsvorrichtung zur Erfassung von Objekten mittels elektromagnetischer Abtastsignale,
mit wenigstens einer Sendeeinrichtung, welche wenigstens eine Signalquelle zur Erzeugung von elektromagnetischen Abtastsignalen und wenigstens einen Strahlverschieber zum Verschieben von Signalpfaden von elektromagnetischen Abtastsignalen aufweist,
und mit wenigstens einer Empfangseinrichtung zum empfangen von elektromagnetischen Echosignalen, welche von elektromagnetischen Abtastsignalen herrühren, die an Objekten reflektiert werden.

Des Weiteren betrifft die Erfindung ein Verfahren zum Betreiben einer Sendeeinrichtung einer Detektionsvorrichtung zur Erfassung von Objekten mittels elektromagnetischer Abtastsignale, bei dem mit wenigstens einer Signalquelle elektromagnetische Abtastsignale erzeugt werden und mit wenigstens einem Strahlverschieber ein Signalpfad wenigstens eines elektromagnetischen Abtastsignals verschoben wird.

### Stand der Technik

Aus der US 2020/0333461 A1 ist ein Sender für Light Detection and Ranging (LiDAR) bekannt. Der Sender umfasst eine Laserquelle, die so konfiguriert ist, dass sie einen nativen Laserstrahl bereitstellt, einen Lichtkollimator, der so konfiguriert ist, dass er den nativen Laserstrahl kollimiert, um einen Eingangslaserstrahl zu bilden, der entlang einer lateralen Richtung sendet, und einen Strahlverschieber, der so konfiguriert ist, dass er den Eingangslaserstrahl entlang einer vertikalen Richtung senkrecht zu der lateralen Richtung um eine Verschiebung verschiebt, um einen Ausgangslaserstrahl zu bilden, wobei der Ausgangslaserstrahl und der Eingangslaserstrahl parallel zueinander sind.

Das Dokument US 5 157 257 A betrifft einen Lidar-Sensor zur Detektion von Hydrocarbonat in der Atmosphäre, bei dem eine Mehrzahl von Laserlichtquellen unterschiedlicher Wellenlängen zu einem Mutiplex-Signal gemischt werden und auf einen ausgehenden Signal-Hauptpfad in die Atmosphäre ausgesendet werden. Die Lichtquellen sind radial dabei beabstandet von einer Hauptachse angeordnet und senden jeweils Lichtstrahlen parallel zur Hauptachse in Richtung eines rotierenden Strahlenverschiebeelements aus, welches die Lichtstrahlen auf einen gemeinsamen Ausgangslichtpfad umlenkt. Das Strahlenverschiebeelement rotiert dabei um die Hauptachse und umfasst einen Eingangsspiegel zur Umlenkung der eingehenden Lichtstrahlen der Lichtquellen auf einen Ausgangsspiegel, welcher die Lichtstrahlen auf einen gegenüber dem Eingangslichtpfad parallel versetzten gemeinsamen Ausgangslichtpfad umlenkt.

Der Erfindung liegt die Aufgabe zugrunde, eine Sendeeinrichtung, eine Detektionsvorrichtung, ein Fahrzeug und ein Verfahren der eingangs genannten Art zu gestalten, bei denen eine Sendefrequenz, mit der elektromagnetische Abtastsignale gesendet werden, erhöht werden kann.

### Offenbarung der Erfindung

Diese Aufgabe wird erfindungsgemäß bei der Sendeeinrichtung dadurch gelöst, dass die Sendeeinrichtung wenigstens zwei Signalquellen aufweist, welche zum Erzeugen von elektromagnetischen Abtastsignalen individuell angesteuert werden können,
wenigstens ein Strahlverschieber zwischen wenigstens zwei Verschiebezuständen umstellbar ist, wobei die Verschiebezustände unterschiedlichen Signalquellen zugeordnet sind,
die Signalpfade von wenigstens zwei Signalquellen am Ausgang des wenigstens einen Strahlverschiebers in den Verschiebezuständen, welche den Signalquellen jeweils zugeordnet sind, auf einem gemeinsamen Haupt-Signalpfad der Sendeeinrichtung liegen, wobei wenigstens ein Strahlverschieberelement des wenigstens einen Strahlverschiebers zur Einstellung von Verschiebezuständen um wenigstens eine Strahlverschieberachse kippbar ist.

Erfindungsgemäß sind wenigstens zwei Signalquellen vorgesehen, welche individuell angesteuert werden können. Auf diese Weise können die Signalquellen nacheinander, insbesondere im Wechsel, zum Erzeugen von elektromagnetischen Abtastsignalen aktiviert werden. Den Signalquellen sind jeweilige Verschiebezustände des wenigstens einen Strahlverschiebers zugeordnet. Durch entsprechende Einstellung des Verschiebezustands des wenigstens einen Strahlverschiebers wird der Signalpfad der aktiven Signalquelle auf den gemeinsamen Haupt-Signalpfad verschoben. Auf diese Weise werden die Abtastsignale der wenigstens zwei Signalquellen auf den gemeinsamen Haupt-Signalpfad ausgesendet werden. Die Abtastsignale nehmen so hinter dem wenigstens einen Strahlverschieber den gleichen Weg direkt oder indirekt, insbesondere über andere Bauteile, wie beispielsweise optische Systeme, Abtastsignal-Umlenkeinrichtungen, oder dergleichen, in einen Überwachungsbereich der Detektionsvorrichtung. Der Überwachungsbereich wird mit der Detektionsvorrichtung auf Objekte hin überwacht.

Bei einer einzelnen Signalquelle ist die Sendefrequenz, in der Abtastsignale nacheinander erzeugt werden können, aus physikalischen Gründen limitiert. Limitierende Faktoren können insbesondere Begrenzungen bei der Bereitstellung von notwendigen elektrischen Leistungen oder Stromstärken durch entsprechende Versorgungsbauteile sein.

Die Erfindung ermöglicht es, mehrere Signalquellen in zeitlicher Folge zur Erzeugung von jeweiligen Abtastsignalen zu aktivieren und jeweils durch entsprechende Einstellung des wenigstens einen Strahlverschiebers die Abtastsignale auf den gemeinsamen Haupt-Signalpfad zu lenken. So kann die Sendefrequenz, in der Abtastsignale mit der Sendeeinrichtung gesendet werden, insgesamt gegenüber der Sendefrequenz, die mit den einzelnen Signalquellen möglich ist, vergrößert werden.

Erfindungsgemäße Detektionsvorrichtungen können in Einsatzbereichen, bei denen eine entsprechend hohe Messfrequenz, insbesondere eine hohe Abtastfrequenz, bei der Erfassung von Objekten erforderlich ist, eingesetzt werden. Insbesondere bei Fahrzeugen sind bei Fahrmanöver mit hohen Geschwindigkeiten hohe Messefrequenzen erforderlich, um Objekte zuverlässig zu erfassen. Dies ist mit erfindungsgemäßen Detektionsvorrichtungen möglich.

Mit einem Strahlverschieber können Signalpfade von elektromagnetischen Abtastsignalen verschoben werden. Derartige Strahlverschieber können im Englischsprachigen als "Beam Shifter" bezeichnet werden. Signalpfade im Sinne der Erfindung sind die Wege, auf welchen sich die Abtastsignale ausbreiten. Ein Signalpfad wird durch die Ausbreitungsrichtung der Abtastsignale und die räumliche Lage charakterisiert. Bei einer Verschiebung eines Signalpfades bleibt die Ausbreitungsrichtung der Abtastsignale erhalten. Lediglich die Lage des Signalpfades wird bei der Verschiebung verändert. Der ursprüngliche Signalpfad und der verschobene Signalpfad verlaufen im Ergebnis versetzt parallel zueinander.

Vorteilhafterweise kann wenigstens eine Signalquelle eine optische Signalquelle sein. Mit optischen Signalquellen können optische Abtastsignale erzeugt werden. Bei den optischen Abtastsignalen kann es sich um Lichtsignale, insbesondere Lasersignale, handeln. Die Signalquellen können Laser, Laserdioden, aufweisen oder daraus bestehen.

Vorteilhafterweise kann wenigstens eine Signalquelle wenigstens ein optisches System, insbesondere eine optische Linse oder dergleichen, aufweisen mit dem die erzeugten Abtastsignale beeinflusst, insbesondere fokussiert und/oder aufgeweitet werden können.

Vorteilhafterweise kann wenigstens eine Signalquelle zur Erzeugung von optischen Abtastsignalen in Form von Signalpulsen ausgestaltet sein. Pulsförmige Abtastsignale können mit einer Empfangseinrichtung der Detektionsvorrichtung entsprechenden pulsförmigen Echosignalen zugeordnet werden.

Vorteilhafterweise kann die Detektionsvorrichtung nach einem Signal-Laufzeitverfahren, insbesondere einem Signalpuls-Laufzeitverfahren, arbeiten. Nach Signalpuls-Laufzeitverfahren arbeitende Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden.

Vorteilhafterweise kann die Detektionsvorrichtung als scannendes System ausgestaltet sein. Dabei kann mit elektromagnetischen Abtastsignalen, insbesondere Lichtsignalen, ein Überwachungsbereich abgetastet, also abgescannt, werden. Dazu kann die Ausbreitungsrichtung der Abtastsignale über den Überwachungsbereich geschwenkt werden. Hierbei kann wenigstens eine Abtastsignal-Umlenkeinrichtung zum Einsatz kommen.

Vorteilhafterweise kann die Detektionsvorrichtung als laserbasiertes Entfernungsmesssystem ausgestaltet sein. Laserbasierte Entfernungsmesssysteme können Laser, insbesondere Diodenlaser, als Signalquellen aufweisen. Mit Lasern können insbesondere gepulste Lasersignale als Abtastsignale gesendet werden. Mit Lasern können Abtastsignale in für das menschliche Auge sichtbaren oder nicht sichtbaren Wellenlängenbereichen emittiert werden. Entsprechend kann eine Empfangseinrichtung der Detektionsvorrichtung einen für die Wellenlänge der ausgesendeten Abtastsignale ausgelegten Detektor, insbesondere einen Punktsensor, Zeilensensor oder Flächensensor, im Besonderen eine (Lawinen)fotodiode, eine Photodiodenzeile, einen CCD-Sensor, einen Active-Pixel-Sensor, insbesondere einen CMOS-Sensor oder dergleichen, aufweisen. Das laserbasierte Entfernungsmesssystem kann vorteilhafterweise ein Laserscanner sein. Mit Laserscannern können Überwachungsbereiche mit insbesondere gepulsten Laser-Abtastsignalen abgetastet werden.

Vorteilhafterweise kann die Erfindung bei Fahrzeugen, insbesondere Kraftfahrzeugen, verwendet werden. Vorteilhafterweise kann die Erfindung bei Landfahrzeugen, insbesondere Personenkraftwagen, Lastkraftwagen, Bussen, Motorrädern oder dergleichen, Luftfahrzeugen, insbesondere Drohnen, und/oder Wasserfahrzeugen verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb, in der Robotik und/oder bei Maschinen, insbesondere Bau- oder Transportmaschinen, wie Kränen, Baggern oder dergleichen, eingesetzt werden.

Die Detektionsvorrichtung kann vorteilhafterweise mit wenigstens einer elektronischen Steuervorrichtung eines Fahrzeugs oder einer Maschine, insbesondere einem Fahrerassistenzsystem und/oder einer Fahrwerksregelung und/oder einer Fahrer-Informationseinrichtung und/oder einem Parkassistenzsystem und/oder einer Gestenerkennung oder dergleichen, verbunden oder Teil einer solchen sein. Auf diese Weise kann wenigstens ein Teil der Funktionen des Fahrzeugs oder der Maschine autonom oder teilautonom ausgeführt werden.

Die Detektionsvorrichtung kann zur Erfassung von stehenden oder bewegten Objekten, insbesondere Fahrzeugen, Personen, Tieren, Pflanzen, Hindernissen, Fahrbahnunebenheiten, insbesondere Schlaglöchern oder Steinen, Fahrbahnbegrenzungen, Verkehrszeichen, Freiräumen, insbesondere Parklücken, Niederschlag oder dergleichen, und/oder von Bewegungen und/oder Gesten eingesetzt werden.

Bei einer vorteilhaften Ausführungsform kann
wenigstens ein Strahlverschieberelement wenigstens eines Strahlverschiebers zur Einstellung von Verschiebezuständen um zwei insbesondere zueinander orthogonale Strahlverschieberachsen kippbar sein.

Erfindungsgemäß weist wenigstens ein Strahlverschieber wenigstens ein Strahlverschieberelement auf. Durch Ändern einer Position und/oder Orientierung des wenigstens einen Strahlverschieberelements können die Signalpfade der Abtastsignale entsprechend verschoben werden.

Das wenigstens eine Strahlverschieberelement kann mit einem steuerbaren Aktor bewegt werden. Auf diese Weise kann der wenigstens eine Strahlverschieber auf die entsprechende Verschiebezustände eingestellt werden.

Wenigstens ein Strahlverschieberelement ist erfindungsgemäß zur Einstellung von Verschiebezuständen um wenigstens eine Strahlverschieberachse kippbar. Kippbewegungen können einfach und präzise realisiert werden. Durch Kippen um eine Strahlverschieberachse können die Signalpfade der Abtastsignale entsprechend in einer Dimension verschoben werden. Durch Kippen um zwei Strahlverschieberachsen können die Signalpfade der Abtastsignale entsprechend in zwei Dimensionen verschoben werden. Durch die Verwendung von zueinander orthogonalen Strahlverschieberachsen kann eine effiziente Verschiebung der Signalpfade der Abtastsignale in zwei Dimensionen realisiert werden.

Vorteilhafterweise kann wenigstens ein Strahlverschieberelement als Fenster realisiert sein. Fenster können stabil in entsprechenden Rahmen bewegbar angeordnet werden.

Vorteilhafterweise kann wenigstens ein Strahlverschieberelement aus wenigstens einem Material sein, welches für die Abtastsignale durchlässig ist, und wenigstens zwei parallele Oberflächen aufweisen, die quer zu dem zu verschiebenden Signalpfad der elektromagnetischen Abtastsignale verlaufen. Auf diese Weise können durch entsprechendes Schwenken oder Kippen des wenigstens einen Strahlverschieberelements die Signalpfade von Abtastsignalen parallel verschoben werden.

Vorteilhafterweise kann wenigstens ein Aktor wenigstens eines Strahlverschiebers wenigstens einen elektrischen und/oder elektromechanischen Antrieb, insbesondere einen Motor, einen Piezo-Antrieb, einen Bimetall-Aktor oder dergleichen aufweisen oder daraus bestehen. Elektrische Antriebe und elektromechanische Antriebe können mit elektrischen Steuersignalen, insbesondere mittels einer elektrischen Steuereinrichtung oder einer elektrischen Steuer- und Auswerteeinrichtung, gesteuert werden.

Vorteilhafterweise kann wenigstens ein Strahlverschieber in Abstimmung mit Steuerungen von anderen Einrichtungen der Detektionsvorrichtung, insbesondere wenigstens einer Signalquelle, wenigstens einer Empfangseinrichtung und/oder wenigstens einer Abtastsignal-Umlenkeinrichtung, gesteuert werden. Auf diese Weise können Messungen mit der Detektionsvorrichtung präziser durchgeführt werden.

Vorteilhafterweise können wenigstens ein Strahlverschieber und wenigstens eine andere Einrichtung der Detektionsvorrichtung mit denselben Steuersignalen, insbesondere Triggersignalen, und/oder mittels derselben Steuereinrichtung gesteuert werden. Auf diese Weise kann die Steuerung präziser und/oder einfacher realisiert werden.

Bei einer weiteren vorteilhaften Ausführungsform kann wenigstens ein Strahlverschieber wenigstens ein für die elektromagnetischen Abtastsignale wenigstens teilweise durchlässiges Strahlverschieberelement aufweisen und/oder wenigstens ein Strahlverschieber kann wenigstens ein für die elektromagnetischen Abtastsignale wenigstens teilweise reflektierendes Strahlverschieberelement aufweisen. Auf diese Weise kann das wenigstens eine Strahlverschieberelement flexibler in den Signalpfaden der Signalquellen angeordnet werden.

Vorteilhafterweise kann wenigstens ein Strahlverschieberelement entweder reflektierend oder durchlässig sein. Alternativ kann wenigstens ein Strahlverschieberelement sowohl teilweise reflektierend als auch teilweise durchlässig sein. Auf diese Weise kann die Sendeeinrichtung flexibler ausgestaltet werden.

Vorteilhafterweise kann wenigstens ein Strahlverschieberelement aus Glas, Kunststoff oder dergleichen, oder einem andersartigen reflektierenden und/oder durchlässigen Material bestehen. Derartige Materialien können einfach bearbeitet, insbesondere geformt, werden. Ferner sind derartige Materialien verhältnismäßig günstig und/oder robust.

Bei einer weiteren vorteilhaften Ausführungsform kann die Sendeeinrichtung wenigstens eine Steuereinrichtung aufweisen, mit welcher der wenigstens eine Strahlverschieber und/oder die wenigstens zwei Signalquellen steuerbar sind. Auf diese Weise kann der wenigstens eine Strahlverschieber und/oder die wenigstens zwei Signalquellen gezielt angesteuert werden.

Vorteilhafterweise kann die wenigstens eine Steuereinrichtung eine elektrische Steuereinrichtung sein. Auf diese Weise kann die Steuerung auf elektrischem Wege erfolgen. Die wenigstens eine Steuereinrichtung kann auf softwaremäßigem und/oder hardwaremäßigem Wege realisiert sein.

Bei einer weiteren vorteilhaften Ausführungsform kann wenigstens eine Steuereinrichtung der Sendeeinrichtung Mittel aufweisen, mit denen der wenigstens eine Strahlverschieber und die wenigstens zwei Signalquellen aufeinander abgestimmt gesteuert werden können. Auf diese Weise kann der Verschiebezustand des wenigstens einen Strahlverschiebers gezielt auf die jeweils aktive Signalquelle eingestellt werden.

Bei einer weiteren vorteilhaften Ausführungsform können die Signalpfade der wenigstens zwei Signalquellen in Ausbreitungsrichtung der Abtastsignale vor dem wenigstens einen Strahlverschieber zueinander parallel verlaufen. Auf diese Weise können die Signalpfade mit dem wenigstens einen Strahlverschieber jeweils mittels Parallelverschiebungen auf den Haupt-Signalpfad verschoben werden.

Bei einer weiteren vorteilhaften Ausführungsform kann in dem Haupt-Signalpfad wenigstens ein optisches System angeordnet sein. Mit dem wenigstens einen optischen System können die Abtastsignale in Ausbreitungsrichtung hinter dem wenigstens einen Strahlverschieber entsprechend beeinflusst, insbesondere aufgeweitet und/oder fokussiert, werden.

Vorteilhafterweise können die Abtastsignale mit dem wenigstens einen optischen System können die Abtastsignale auf einen definierten Bereich eines Umlenkelements, insbesondere eines Spiegels oder dergleichen, einer Abtastsignal-Umlenkeinrichtung abgebildet, insbesondere fokussiert, werden.

Vorteilhafterweise kann wenigstens ein optisches System wenigstens eine optische Linse aufweisen. Optische Linsen können einfach realisiert und eingestellt werden.

Vorteilhafterweise können mit wenigstens zwei Signalquellen gleiche Abtastsignale erzeugt werden. Auf diese Weise kann der Überwachungsbereich unabhängig von der aktiven Signalquelle immer mit den gleichen Abtastsignalen abgetastet werden.

Alternativ oder zusätzlich können vorteilhafterweise mit wenigstens zwei Signalquellen unterschiedliche Abtastsignale, insbesondere Abtastsignale mit unterschiedlichen Wellenlängen, erzeugt werden. Auf diese Weise kann ein Leistungsumfang der Detektionsvorrichtung zu Erfassung von Objekten verbessert werden.

Vorteilhafterweise können die Ausgangsseiten von wenigstens zwei Signalquellen im gleichen Abstand zu wenigstens einem Strahlverschieber angeordnet sein. Auf diese Weise können gleiche Signallaufzeiten erreicht werden.

Alternativ oder zusätzlich können vorteilhafterweise die Ausgangsseiten von wenigstens zwei Signalquellen in unterschiedlichen Abständen zu wenigstens einem Strahlverschieber angeordnet sein. Auf diese Weise können die Signalquellen platzsparend versetzt zueinander angeordnet werden.

Alternativ oder zusätzlich können vorteilhafterweise die Ausgangsseiten von wenigstens zwei Signalquellen entlang einer Linie angeordnet sein, die quer, insbesondere senkrecht, zu den Signalpfaden und/oder dem Haupt-Signalpfad verläuft. Auf diese Weise können die Signalpfade durch Kippen eines Strahlverschieberelements des Strahlverschiebers um nur einer Achse jeweils auf den Haupt-Signalpfad verschoben werden.

Alternativ oder zusätzlich können vorteilhafterweise die Ausgangsseiten von wenigstens drei Signalquellen entlang einer Fläche angeordnet sein, die quer zu den Signalpfaden und/oder dem Haupt-Signalpfad verläuft. So können die Signalquellen insgesamt platzsparend flächig angeordnet werden.

Bei einer weiteren vorteilhaften Ausführungsform können bei einer Anordnung von wenigstens drei Signalquellen die Signalpfade von benachbarten Signalquellen jeweils im gleichen Abstand verlaufen. Auf diese Weise können die einzelnen Signalpfade durch gleichmäßiges ändern der Verschiebezustände des wenigstens einen Strahlverschiebers auf den Haupt-Signalpfad verschoben werden. So kann die Einstellung der Verschiebezustände insgesamt einfacher gestaltet werden.

Bei einer weiteren vorteilhaften Ausführungsform können
die Signalpfade von wenigstens zwei Signalquellen in einer Ebene verlaufen, die sich senkrecht zu einer Strahlverschieberachse erstreckt, um die wenigstens ein Strahlverschieberelement wenigstens eines Strahlverschiebers kippbar ist,
   und/oder
die Signalpfade von wenigstens zwei Signalquellen können in einer Ebene verlaufen, die sich parallel zu einer Strahlverschieberachse erstreckt, um die wenigstens ein Strahlverschieberelement wenigstens eines Strahlverschiebers kippbar ist. Auf diese Weise können die Signalpfade der entsprechenden Signalquellen durch Kippen des wenigstens einen Strahlverschieberelements um eine Strahlverschieberachse und/oder um zwei Strahlverschieberachsen, die insbesondere orthogonal zueinander verlaufen, jeweils auf den Haupt-Signalpfad verschoben werden.

Bei einer weiteren vorteilhaften Ausführungsform kann die Sendeeinrichtung wenigstens eine Abtastsignal-Umlenkeinrichtung aufweisen, welche in dem Haupt-Signalpfad des wenigstens einen Strahlverschiebers angeordnet ist. Mit einer Abtastsignal-Umlenkeinrichtung können die Abtastsignale in den Überwachungsbereich gelenkt werden. Mithilfe des wenigstens einen Strahlverschiebers kann erreicht werden, dass die Abtastsignale von allen Signalquellen auf denselben Bereich der wenigstens einen Signalumlenkeinrichtung treffen.

Vorteilhafterweise kann die Sendeeinrichtung wenigstens eine einstellbare Abtastsignal-Umlenkeinrichtung aufweisen. Auf diese Weise kann die Ausbreitungsrichtung der Abtastsignale in den Überwachungsbereich verändert werden.

Vorteilhafterweise kann die Sendeeinrichtung wenigstens eine Abtastsignal-Umlenkeinrichtung mit wenigstens einem kippbaren, schwenkbaren und/oder drehbaren Abtastsignal-Umlenkelement aufweisen. Auf diese Weise kann die Ausbreitungsrichtung der Abtastsignale in dem Überwachungsbereich geschwenkt werden. So kann der Überwachungsbereich mit den Abtastsignalen abgetastet werden.

Vorteilhafterweise kann wenigstens ein Abtastsignal-Umlenkelement wenigstens einer Abtastsignal-Umlenkeinrichtung der Sendeeinrichtung einen Umlenkspiegel oder dergleichen aufweisen oder daraus bestehen. Umlenkspiegel können einfach und robust realisiert werden.

Vorteilhafterweise kann die Sendeeinrichtung wenigstens eine Abtastsignal-Umlenkeinrichtung mit wenigstens einem Aktor aufweisen. Mit einem Aktor kann eine Umlenkwirkung der Abtastsignal-Umlenkeinrichtung auf Abtastsignale verändert werden. Vorteilhafterweise kann mit wenigstens einem Aktor ein Abtastsignal-Umlenkelement bewegt, insbesondere gekippt, geschwenkt oder gekippt, werden.

Vorteilhafterweise kann wenigstens ein Aktor elektrisch gesteuert werden. Auf diese Weise kann die Abtastsignal-Umlenkeinrichtung mittels elektrischer Steuermittel, insbesondere mit wenigstens einer Steuereinrichtung oder Steuer- und Auswerteeinrichtung, gesteuert werden.

Vorteilhafterweise kann wenigstens ein Aktor wenigstens einen elektrischen Antrieb, insbesondere einen Schrittmotor, ein Galvanometer oder dergleichen, aufweisen. Derartige Aktoren können einfach realisiert und gesteuert werden.

Vorteilhafterweise kann wenigstens eine Abtastsignal-Umlenkeinrichtung wenigstens einen Schwenkspiegel, einen mikroelektromechanischen Schwenkspiegel (MEMS), oder dergleichen aufweisen oder daraus bestehen. Derartige Abtastsignal-Umlenkeinrichtungen können einfach und/oder platzsparend realisiert werden. Ferner können derartige Abtastsignal-Umlenkeinrichtungen robust realisiert werden. Auf diese Weise kann die Detektionsvorrichtung auch unter rauen Bedingungen, beispielsweise in oder an einem Fahrzeug oder dergleichen, zuverlässig betrieben werden.

Bei einer weiteren vorteilhaften Ausführungsform können mehrere Strahlverschieber kaskadenartig hintereinander angeordnet sein. Auf diese Weise kann die Anzahl der Signalquellen, deren Signalpfade auf einen Haupt-Signalpfad verschoben werden können, vergrößert werden.

Erfindungsgemäß weist die Detektionsvorrichtung eine erfindungsgemäße Sendeeinrichtung auf, mit der Abtastsignale gezielt in einen Überwachungsbereich gesendet werden können. Mit einer Empfangseinrichtung können reflektierte elektromagnetische Abtastsignale als elektromagnetische Echosignale empfangen werden. Die elektromagnetischen Echosignale können mit entsprechenden Empfängern der Empfangseinrichtung in elektrische Empfangssignale umgewandelt werden. Auf Basis der empfangenen Echosignale, respektive den elektrischen Empfangssignalen, können Informationen aus dem Überwachungsbereich, insbesondere über Objekte, gewonnen werden. Derartige Informationen können insbesondere Entfernungen, Richtungen und/oder Geschwindigkeiten von erfassten Objekten relativ zur Detektionsvorrichtung sein.

Vorteilhafterweise kann die Detektionsvorrichtung wenigstens eine Steuereinrichtung, insbesondere eine elektronische Steuereinrichtung, aufweisen. Mit der wenigstens einen Steuereinrichtung können die Komponenten der Detektionsvorrichtung insbesondere auf elektronischem Wege gesteuert werden. So können die wenigstens eine Sendeeinrichtung, die wenigstens eine Empfangseinrichtung und gegebenenfalls wenigstens eine Abtastsignal-Umlenkeinrichtung und/oder einer Echosignal-Umlenkeinrichtung gezielter, insbesondere synchron, angesteuert werden.

Alternativ oder zusätzlich kann die Detektionsvorrichtung wenigstens eine Auswerteeinrichtung aufweisen. Auf diese Weise können elektrische Empfangssignale, die mit der wenigstens einen Empfangseinrichtung aus elektromagnetischen Echosignalen ermittelt werden, ausgewertet werden.

Die Auswerteeinrichtung kann Mittel aufweisen, mit denen aus den elektrischen Empfangssignalen Positionsgrößen, insbesondere Entfernungsgrößen, Richtungsgröße und/oder Geschwindigkeitsgrößen, ermittelt werden, welche die Positionen von erfassen Objekten, insbesondere die Entfernung, die Richtung und/oder die Geschwindigkeit relativ zur Detektionsvorrichtung, charakterisieren können.

Vorteilhafterweise können Steuerfunktionen der Detektionsvorrichtung und Auswertefunktionen zur Auswertung von Empfangssignalen zentral, insbesondere mittels einer Steuer- und Auswerteeinrichtung, oder wenigstens teilweise dezentral mittels entsprechenden Steuermitteln und Auswertemitteln, insbesondere auf softwaretechnischem und/oder hardwaretechnischem Wege, realisiert werden.

Erfindungsgemäß weist das Fahrzeug wenigstens eine Detektionsvorrichtung mit wenigstens einer erfindungsgemäßen Sendeeinrichtung auf, mit der wenigstens ein Überwachungsbereich in der Umgebung des Fahrzeugs oder innerhalb des Fahrzeugs insbesondere auf Objekte hin überwacht werden kann. Die Erfindung ermöglicht bei Fahrmanöver mit hohen Geschwindigkeiten hohe Messefrequenzen. So können auch bei hohen Fahrgeschwindigkeiten Objekte zuverlässig erfasst werden.

Vorteilhafterweise kann das Fahrzeug wenigstens ein Fahrassistenzsystem aufweisen. Mit dem Fahrerassistenzsystem kann das Fahrzeug autonom oder wenigstens teilweise autonom betrieben werden.

Vorteilhafterweise kann wenigstens eine Detektionsvorrichtung mit wenigstens einem Fahrerassistenzsystem des Fahrzeugs funktional verbunden sein. Auf diese Weise können Informationen über den Überwachungsbereich, insbesondere Entfernungsgrößen, Richtungsgrößen und/oder Geschwindigkeitsgrößen, welche mit der wenigstens einen Detektionsvorrichtung ermittelt werden können, an das wenigstens eine Fahrerassistenzsystem übermittelt werden. Mit dem wenigstens einen Fahrerassistenzsystem kann das Fahrzeug unter Berücksichtigung der Information über den Überwachungsbereich autonom oder wenigstens teilweise autonom betrieben werden.

Des Weiteren wird die Aufgabe erfindungsgemäß bei dem Verfahren dadurch gelöst, dass
wenigstens zwei Signalquellen zum Erzeugen von elektromagnetischen Abtastsignalen individuell angesteuert werden,
wobei wenigstens ein Strahlverschieber auf einen von wenigstens zwei Verschiebezuständen eingestellt wird, welcher der jeweils wenigstens einen aktiven Signalquelle zugeordnet ist,
der Signalpfad der jeweils wenigstens einen aktiven Signalquelle am Ausgang des wenigstens einen Strahlverschiebers in dem jeweiligen Verschiebezustand, welcher der wenigstens einen aktiven Signalquelle jeweils zugeordnet ist, auf einen gemeinsamen Haupt-Signalpfad für die wenigstens zwei Signalquellen verschoben wird, wobei wenigstens ein Strahlverschieberelement des wenigstens einen Strahlverschiebers zur Einstellung von Verschiebezuständen um wenigstens eine Strahlverschieberachse gekippt wird.

Erfindungsgemäß werden mehrere Signalquellen nacheinander zur Aussendung von Abtastsignalen aktiviert, wobei der wenigstens eine Strahlverschieber abhängig von der jeweils aktiven Signalquelle so eingestellt wird, dass der Signalpfad der aktiven Signalquelle auf den Haupt-Signalpfad verschoben wird. Auf diese Weise breiten sich alle Abtastsignale unabhängig von der jeweils aktiven Signalquelle hinter dem wenigstens einen Strahlverschieber entlang des Haupt-Signalpfades aus. Alle Abtastsignale können so auf den gleichen Bereich des Überwachungsbereichs oder einer weiteren Abtastsignal-Umlenkeinrichtung gesendet werden. So kann insgesamt die Messfrequenz, in der die Detektionsvorrichtung betrieben werden kann, erhöht werden.

Vorteilhafterweise kann die Steuerung wenigstens eines Strahlverschiebers an die Steuerung wenigstens einer Signalquelle angepasst werden. Auf diese Weise kann der Verschiebezustand des wenigstens einen Strahlverschiebers mit dem Wechsel der jeweils aktiven Signalquelle umgestellt werden.

Vorteilhafterweise kann die Aktivierung der Signalquellen und die Umstellung der Verschiebezustände des wenigstens einen Strahlverschiebers gemeinsam getriggert werden. Auf diese Weise kann der Aufwand für Steuersignale, insbesondere Triggersignale, verringert werden.

Im Übrigen gelten die im Zusammenhang mit der erfindungsgemäßen Sendeeinrichtung, der erfindungsgemäßen Detektionsvorrichtung, dem erfindungsgemäßen Fahrzeug und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden.

Es zeigen schematisch
- Figur 1: ein Fahrzeug in der Vorderansicht, mit einem Fahrerassistenzsystem und einem LiDAR-System zur Erfassung von Objekten in Fahrtrichtung vor dem Fahrzeug;
- Figur 2: eine Funktionsdarstellung des Fahrzeugs mit dem Fahrerassistenzsystem und dem LiDAR-System aus der Figur 1;
- Figur 3: eine Sendeeinrichtung und eine Abtastsignal-Umlenkeinrichtung des LiDAR-Systems aus den Figuren 1 und 2;
- Figur 4: eine Detailansicht der Sendeeinrichtung des LiDAR-Systems aus der Figur 3;
- Figur 5: eine Vorderansicht eines Strahlverschiebers der Sendeeinrichtung aus den Figuren 3 und 4;
- Figur 6: eine Vorderansicht auf zwei Signalquellen der Sendeeinrichtung aus den Figuren 3 und 4 in zwei beispielhaften Schaltzuständen;
- Figur 7: eine Vorderansicht auf vier Signalquellen einer Sendeeinrichtung gemäß einem weiteren Ausführungsbeispiel, welche bei dem LiDAR-System aus den Figuren 1 und 2 verwendet werden kann, in vier beispielhaften Schaltzuständen.

In den Figuren sind gleiche Bauteile mit gleichen Bezugszeichen versehen.

### Ausführungsform(en) der Erfindung

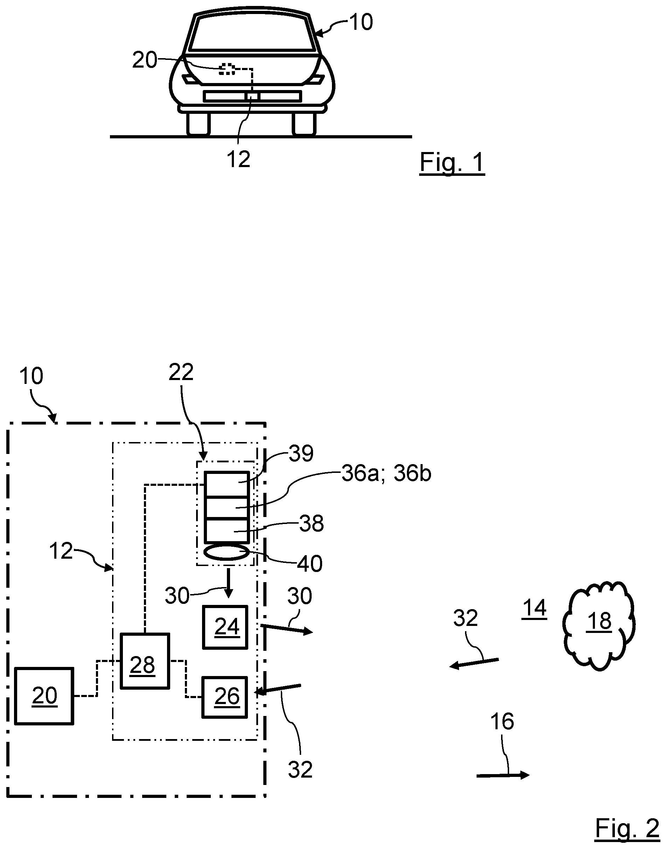

In der Figur 1 ist ein Fahrzeug 10 beispielhaft in Form eines Personenkraftwagens in der Vorderansicht gezeigt.

Das Fahrzeug 10 verfügt über eine Detektionsvorrichtung beispielhaft in Form eines LiDAR-Systems 12. Das LiDAR-System 12 ist als Laserscanner ausgestaltet. In Figur 2 ist eine Funktionsdarstellung des Fahrzeugs 10 mit dem LiDAR-System 12 gezeigt.

Das LiDAR-System 12 ist beispielhaft in der vorderen Stoßstange des Fahrzeugs 10 angeordnet. Mit dem LiDAR-System 12 kann ein Überwachungsbereich 14 in Fahrtrichtung 16 vor dem Fahrzeug 10 auf Objekte 18 hin überwacht werden. Das LiDAR-System 12 kann auch an anderer Stelle am Fahrzeug 10 angeordnet und anders ausgerichtet sein. Das LiDAR-System 12 kann auch in dem Fahrzeug 10 zur Überwachung eines Innenraums angeordnet sein. Mit dem LiDAR-System 12 können Objektinformationen, beispielsweise Entfernungen, Richtungen und Geschwindigkeiten von Objekten 18 relativ zum Fahrzeug 10, respektive zum LiDAR-System 12, ermittelt werden.

Bei den Objekten 18 kann es sich um stehende oder bewegte Objekte, beispielsweise um andere Fahrzeuge, Personen, Tiere, Pflanzen, Hindernisse, Fahrbahnunebenheiten, beispielsweise Schlaglöcher oder Steine, Fahrbahnbegrenzungen, Verkehrszeichen, Freiräume, beispielsweise Parklücken, Niederschlag oder dergleichen handeln. Mit dem LiDAR-System 12 können auch Gesten von Personen erfasst werden.

Das LiDAR-System 12 ist mit einem Fahrerassistenzsystem 20 verbunden. Mit dem Fahrerassistenzsystem 20 kann das Fahrzeug 10 autonom oder teilautonom betrieben werden.

Das LiDAR-System 12 umfasst beispielhaft eine Sendeeinrichtung 22, eine Abtastsignal-Umlenkeinrichtung 24, eine Empfangseinrichtung 26 und eine Steuer- und Auswerteeinrichtung 28.

Die Funktionen der Steuer- und Auswerteeinrichtung 28 können zentral oder dezentral realisiert sein. Teile der Funktionen der Steuer- und Auswerteeinrichtung 28 können auch in die Sendeeinrichtung 22 und/oder die Empfangseinrichtung 26 integriert sein. Die Funktionen der Steuer- und Auswerteeinrichtung 28 sind auf softwaremäßigem und hardwaremäßigem Wege realisiert.

Mit der Steuer- und Auswerteeinrichtung 28 werden zur Durchführung von Messungen mit dem LiDAR-System 12 elektrische Sendesignale erzeugt. Die Sendeeinrichtung 22 wird mit den elektrischen Sendesignalen angesteuert, sodass diese entsprechende elektromagnetische Abtastsignale 30 in Form von Lasersignalen sendet.

Die Abtastsignale 30 werden mit der Sendeeinrichtung 22 zu der Abtastsignal-Umlenkeinrichtung 24 gesendet. Mit der Abtastsignal-Umlenkeinrichtung 24 werden die Abtastsignale 30 in den Überwachungsbereich 14 gelenkt, wobei die Ausbreitungsrichtung der Abtastsignale 30 zwischen Messungen schrittweise oder kontinuierlich verändert wird. So wird der Überwachungsbereich 14 mit den Abtastsignalen 30 sukzessive abgetastet.

Die an einem Objekt 18 in Richtung der Empfangseinrichtung 26 reflektierten elektromagnetischen Abtastsignale 30 werden als elektromagnetische Echosignale 32 mit der Empfangseinrichtung 26 empfangen.

Die Empfangseinrichtung 26 kann optional eine Echosignal-Umlenkeinrichtung aufweisen, mit der die elektromagnetischen Echosignale 32 zu einem Empfänger der Empfangseinrichtung 26 gelenkt werden. Der Empfänger kann beispielsweise wenigstens einen Punktsensor, wenigstens Zeilensensor und/oder wenigstens einen Flächensensor, im Besonderen eine (Lawinen)fotodiode, eine Photodiodenzeile, einen CCD-Sensor, einen Active-Pixel-Sensor, beispielsweise einen CMOS-Sensor oder dergleichen, aufweisen oder daraus bestehen.

Mit dem Empfänger werden die elektromagnetischen Echosignale 32 in entsprechende elektrische Empfangssignale umgewandelt. Die elektrischen Empfangssignale werden mit der Steuer- und Auswerteeinrichtung 28 verarbeitet. Beispielsweise werden mit der Steuer- und Auswerteeinrichtung 28 aus den elektrischen Empfangssignalen Objektgrößen, beispielsweise Entfernungsgrößen, Richtungsgrößen und Geschwindigkeitsgrößen, ermittelt, welche Entfernungen, Richtungen und Geschwindigkeiten von erfassten Objekt 18 relativ zum LiDAR-System 12 oder relativ zum Fahrzeug 10 charakterisieren.

Die ermittelten Objektgrößen werden mit der Steuer- und Auswerteeinrichtung 28 zu dem Fahrerassistenzsystem 20 übermittelt. Mit dem Fahrerassistenzsystem 20 wird unter anderem auf Basis der Objektgrößen das Fahrzeug 10 autonom oder teilweise autonom betrieben.

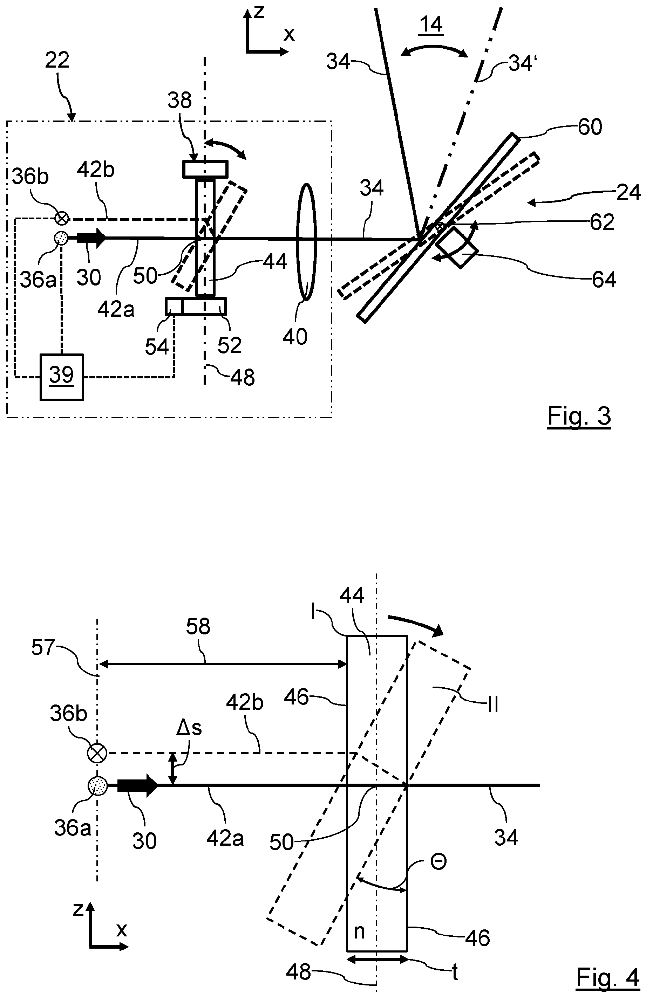

In der Figur 3 sind die Sendeeinrichtung 22 und die Abtastsignal-Umlenkeinrichtung 24 gezeigt. Figur 4 zeigt eine Detailansicht der Sendeeinrichtung 22.

Der besseren Orientierung wegen sind in den Figuren 3 bis 7 die entsprechenden Koordinatenachsen eines kartesischen x-y-z-Koordinatensystems dargestellt. Bei den in den Figuren gezeigten Ausführungsbeispielen erstreckt sich die x-Achse parallel zu einem Haupt-Signalpfad 34 für die Abtastsignale 30 am Ausgang der Sendeeinrichtung 22.

Signalpfade, nämlich der Haupt-Signalpfad 34 und weiter unten erläuterte Signalpfade 42 der Signalquellen, sind die Wege der Abtastsignale 30 bei ihrer Ausbreitung. Ein Signalpfad wird durch die Ausbreitungsrichtung der Abtastsignale 30 und die räumliche Lage insbesondere in der y-z-Ebene charakterisiert. Bei einer Verschiebung eines Signalpfades bleibt die Ausbreitungsrichtung der Abtastsignale 30 erhalten. Lediglich die Lage des Signalpfades beispielsweise in der y-z-Ebene wird bei der Verschiebung verändert. Bei einem Schwenken oder Kippen eines Signalpfades wird die Ausbreitungsrichtung der Abtastsignale 30 verändert.

Bei einem ersten Ausführungsbeispiel umfasst die Sendeeinrichtung 22 zwei Signalquellen 36a und 36b, einen Strahlverschieber 38, eine elektrische Steuereinheit 39 und eine optische Linse 40.

Die Signalquellen 36a und 36b sind jeweils als Laserdioden ausgestaltet. Die Laserdioden weisen integrierte optische Linsen auf, mit denen die jeweils erzeugten Abtastsignale 30 auf einen jeweiligen Signalpfad 42a und 42b fokussiert werden können.

Der Strahlverschieber 38 ist in den Signalpfaden 42a und 42b der Signalquellen 36a und 36b für die Abtastsignale 30 angeordnet. Der Strahlverschieber 38 kann auch als "Beam Shifter" bezeichnet werden.

Die optische Linse 40 ist in dem Haupt-Signalpfad 34 für die Abtastsignale 30 hinter dem Strahlverschieber 38 angeordnet. Mit der optischen Linse 40 werden die Abtastsignale 30 auf die Abtastsignal-Umlenkeinrichtung 24 fokussiert.

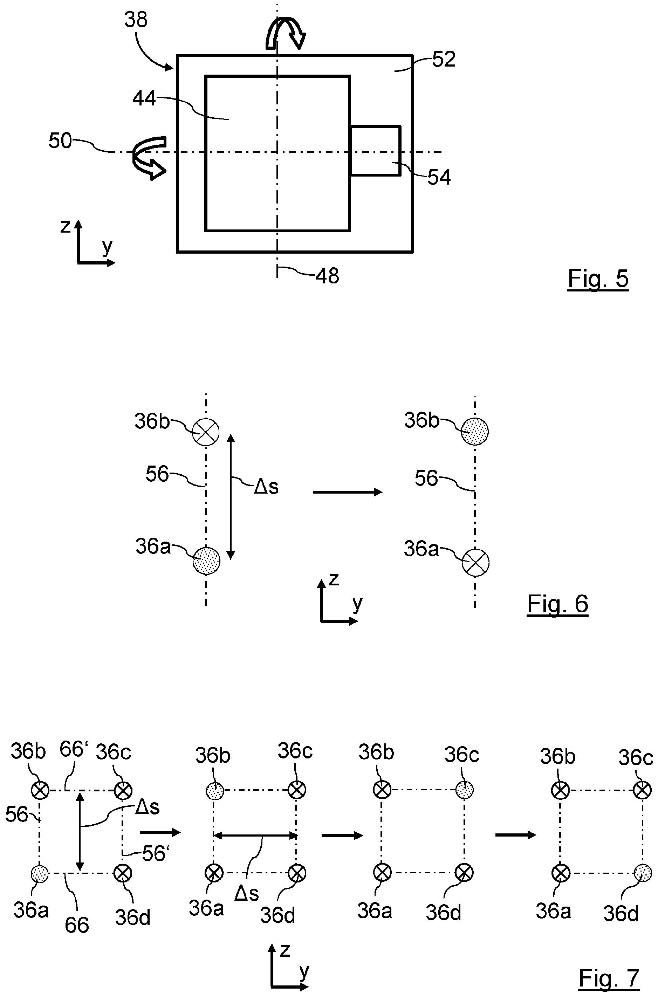

In der Figur 5 ist der Strahlverschieber 38 in der Vorderansicht mit Betrachtungsrichtung auf seine den Signalquellen 36a und 36b abgewandte Seite gezeigt. Der Strahlverschieber 38 umfasst ein bezüglich seiner Verschiebewirkung auf die Signalpfade 42a und 42b veränderbares Strahlverschieberelement in Form eines Fensters 44. Das Fenster 44 besteht aus einem für die Abtastsignale 30 durchlässigen Material, beispielsweise Glas oder Kunststoff. Das Fenster 44 ist transmittierend in den Signalpfaden 42a und 42b angeordnet. Das Fenster 44 verfügt über zwei zueinander parallele ebene Oberflächen 46. Die Signalpfade 42a und 42b verlaufen je nach Einstellung des Fensters 44 senkrecht oder quer zu den Oberflächen 46.

Das Fenster 44 ist beispielhaft um eine erste Strahlverschieberachse 48 und eine zweite Strahlverschieberachse 50 kippbar in einem Rahmen 52 angeordnet. Die erste Strahlverschieberachse 48 und die zweite Strahlverschieberachse 50 verlaufen senkrecht zueinander. Beispielhaft erstreckt sich die erste Strahlverschieberachse 48 parallel zur z-Achse. Die zweite Strahlverschieberachse 50 erstreckt sich parallel zur y-Achse. In einer beispielhaften Neutralstellung des Fensters 44, welche in den Figuren 3 und 4 mit einer durchgängigen Linie gezeigt ist, erstrecken sich die Oberflächen 46 jeweils senkrecht zu den Signalpfaden 42a und 42b der auftreffenden Abtastsignale 30.

Ferner weist der Strahlverschieber 38 einen Aktor, beispielsweise in Form eines elektrischen Antriebs 54, auf. Mit dem Antrieb 54 kann das Fenster 44 in dem Rahmen 52 um die jeweilige Strahlverschieberachse 48 und/oder 50 gekippt werden.

Die Signalquellen 36a und 36b sind so nebeneinander angeordnet, dass ihre jeweiligen Signalpfade 42a und 42b in einem Abstand Δs parallel zueinander in einer in der Figur 6 gezeigten Ebene 56 verlaufen. Figur 6 zeigt die Signalquellen 36a und 36b in der Vorderansicht parallel zu ihren Signalpfaden 42a und 42b entgegen der x-Achse betrachtet. Die Ebene 56 erstreckt sich senkrecht zur zweiten Strahlverschieberachse 50 des Strahlverschiebers 38. Die Ausgangsseiten der Signalquellen 36a und 36b sind in einer Ebene 57 im selben Abstand 58 zu dem Fenster 44 des Strahlverschiebers 38 in dessen Neutralstellung angeordnet. Die Ebene 57 erstreckt sich parallel zur y-z-Ebene und senkrecht zu den Signalpfaden 42a und 42b. Der Haupt-Signalpfad 34 des Strahlverschiebers 38 verläuft bei dem Ausführungsbeispiel in axialer Verlängerung des Signalpfads 42a der Signalquelle 36a.

Die Signalquellen 36a und 36b und der Antrieb 54 des Strahlverschiebers 38 sind steuerbar mit der Steuereinheit 39 verbunden. Die Steuereinheit 39 ihrerseits ist mit der Steuer- und Auswerteeinrichtung 28 verbunden.

Die Abtastsignal-Umlenkeinrichtung 24 umfasst ein Umlenkelement in Form eines Umlenkspiegels 60. Der Umlenkspiegel 60 ist reflektierend im Haupt-Signalpfad 34 der Sendeeinrichtung 22, also des Strahlverschiebers 38, angeordnet. Der Umlenkspiegel 60 ist um eine Spiegel-Schwenkachse 62 schwenkbar. Die Spiegel-Schwenkachse 62 verläuft beispielhaft parallel zur zweiten Strahlverschieberachse 50 und parallel zur y-Achse.

Der Umlenkspiegel 60 ist mit einem Aktor 64 beispielsweise in Form eines Schrittmotors antreibbar verbunden. Der Aktor 64 ist mit der Steuer- und Auswerteeinrichtung 28 signaltechnisch verbunden. Mit der Steuer- und Auswerteeinrichtung 28 kann die Schwenkstellung des Umlenkspiegels 60 ermittelt oder vorgegeben werden.

In der Figur 3 ist der Umlenkspiegel 60 beispielhaft in zwei Schwenkpositionen gestrichelt und mit durchgängiger Linie gezeigt. Durch Ändern der Schwenkposition des Umlenkspiegels 60 wird die Ausbreitungsrichtung der aus der Sendeeinrichtung 22 kommenden und auf den Umlenkspiegel 60 treffenden Abtastsignale 30, also die Richtung des Haupt-Signalpfad 34, in einer Schwenkebene, welche beispielhaft parallel zur x-z-Ebene verläuft, geschwenkt. So wird der Überwachungsbereich 14 mit den Abtastsignalen 30 abgetastet.

Ein Verfahren zum Betreiben des LiDAR-Systems 12 wird im Folgenden beschrieben.

Zur Durchführung von Messungen wird mit der Steuer- und Auswerteeinrichtung 28 die Steuereinheit 39 angesteuert. Mit der Steuereinheit 39 wird der Antrieb 54 des Strahlverschiebers 38 so angesteuert, dass das Fenster 44 auf einen Verschiebezustand eingestellt wird, in dem der Signalpfad der anschließend mit der Steuereinheit 39 aktivierten Signalquelle auf den Haupt-Signalpfad 34 verschoben wird. Die Signalquellen 36a und 36b werden bei einer oder nacheinander folgenden Messungen im Wechsel aktiviert und entsprechend das Fenster 44 zwischen seiner Neutralstellung und seiner Kippstellung umgestellt.

Beispielhaft wird zunächst das Fenster 44 in seine Neutralstellung, welche einen ersten Verschiebezustand I charakterisiert, gestellt. Die Signalquelle 36a wird zur Aussendung eines Abtastsignals 30 aktiviert. Die Aktivierungszustände der Signalquellen 36a und 36b in dieser Messphase sind in der Figur 6 links gezeigt. In der Neutralstellung des Fensters 44 trifft der Signalpfad 42a der Signalquelle 36a senkrecht auf die Oberflächen 46. Der Signalpfad 42a des Abtastsignals 30 wird in der Neutralstellung des Fensters 44 nicht verändert. Das Abtastsignal 30 durchquert das Fenster 44 auf geradem Wege. Hinter dem Fenster 44 geht der Signalpfad 42a der Signalquelle 36a in den Haupt-Signalpfad 34 über. Das Abtastsignal 30 wird mit der optischen Linse 40 auf den Umlenkspiegel 60 der Abtastsignal-Umlenkeinrichtung 24 fokussiert. Abhängig von der Schwenkstellung des Umlenkspiegels 60 wird das Abtastsignal 30 entsprechend in den Überwachungsbereich 14 gelenkt.

Anschließend wird das Fenster 44 beispielhaft um einen Kippwinkel Θ um die zweite Strahlverschieberachse 50 in seine Kippstellung, welche einen zweiten Verschiebezustand II charakterisiert, gekippt, welche in den Figuren 3 und 4 gestrichelt angedeutet ist. Die Signalquelle 36b wird zur Aussendung eines Abtastsignals 30 aktiviert. Die Aktivierungszustände der Signalquellen 36a und 36b in dieser Messphase sind in der Figur 6 rechts gezeigt. Der Verschiebezustand des Strahlverschiebers 38 in der Kippstellung bewirkt, dass der Signalpfad 42b der Signalquelle 36b um den Abstand Δs parallel auf den Haupt-Signalpfad 34 verschoben wird. Der Signalpfad 42b der Signalquelle 36b ist in den Figuren 3 und 4 jeweils gestrichelt gezeigt. Durch die Verschiebung des Signalpfades 42b wird erreicht, dass auch beim Aktivieren der zweiten Signalquelle 36b das entsprechende Abtastsignal 30 auf dem Haupt-Signalpfad 34 durch die optische Linse 40 auf den Umlenkspiegel 60 der Abtastsignal-Umlenkeinrichtung 34 gelangt.

Zwischen dem Abstand Δs, dem Kippwinkel Θ, einer Dicke t des Fensters 44 und einem Brechungsindex n des Fensters 44 besteht folgender Zusammenhang: $Δs = t sin Θ \left(1-\sqrt{\frac{1 - {sin}^{2} Θ}{{n}^{2} - {sin}^{2} Θ}}\right)$

Die Dicke t des Fensters 44 entspricht dem Abstand zwischen den Oberflächen 46.

Zum Umstellen zwischen den zwei in der Ebene 56 senkrecht zur zweiten Strahlverschieberachse 50 angeordneten Signalquellen 36a und 36b ist lediglich ein Kippen des Fensters 44 des Strahlverschiebers 38 in einer Dimension um die zweite Strahlverschieberachse 50 erforderlich.

Beim Betrieb des LiDAR-Systems 12 können die Sendeeinrichtung 22, respektive die Signalquellen 36a und 36b und der Strahlverschieber 38, synchron mit der Abtastsignal-Umlenkeinrichtung 24 angesteuert werden. Die Abtastsignal-Umlenkeinrichtung 24 kann auch unabhängig von der Sendeeinrichtung 22 angesteuert werden.

Bei einer einzelnen Signalquelle ist die Sendefrequenz, in der Abtastsignale 30 nacheinander erzeugt werden können, aus physikalischen Gründen limitiert. Limitierende Faktoren können insbesondere Begrenzungen bei der Bereitstellung von notwendigen elektrischen Leistungen oder Stromstärken durch entsprechende Versorgungsbauteile sein. Das gezeigte Ausführungsbeispiel ermöglicht es, zwei Signalquellen 36a und 36b im Wechsel zur Erzeugung von jeweiligen Abtastsignalen 30 zu aktivieren und jeweils durch entsprechende Einstellung des Strahlverschiebers 38 die Abtastsignale 30 auf den gemeinsamen Haupt-Signalpfad 34 zu lenken. So wird die Sendefrequenz für Abtastsignale 30 der Sendeeinrichtung 22 insgesamt gegenüber der Sendefrequenz für Abtastsignale 30 der einzelnen Signalquellen vergrößert.

Durch das wechselweise ansteuern der Signalquellen 36a und 36b wird insgesamt die Messfrequenz des LiDAR-Systems 12 gegenüber einem Betrieb mit nur einer Signalquelle erhöht. So werden auch bei Fahrmanövern des Fahrzeugs 10 mit hohen Geschwindigkeiten Objekte 18 zuverlässig erfasst.

In der Figur 7 ist ein zweites Ausführungsbeispiel mit einer Anordnung von vier Signalquellen 36a, 36b, 36c und 36d für die Sendeeinrichtung 22 in vier Schaltzuständen gezeigt. Figur 7 zeigt die Signalquellen 36a, 36b, 36c und 36d in der Vorderansicht parallel zu ihren Signalpfaden entgegen der x-Achse betrachtet.

Die Signalquellen 36a und 36b sind wie bei dem in der Figur 6 gezeigten ersten Ausführungsbeispiel angeordnet. Die Signalquellen 36c und 36d sind neben den Signalquellen 36a und 36b so angeordnet, dass deren Signalpfade, die in der Figur 4 von den Signalpfaden 42a und 42b verdeckt und daher nicht bezeichnet sind, parallel zueinander und parallel zu den Signalpfaden 42a und 42b in einer Ebene 56' verlaufen.

Die Ebene 56' verläuft beispielhaft im Abstand Δs parallel zur Ebene 56. Die Signalpfade von benachbarten Signalquellen verlaufen jeweils im gleichen Abstand Δs zueinander. Der Signalpfad 42a der Signalquelle 36a verläuft in einer Ebene 66 mit dem Signalpfad der Signalquelle 36d. Die Ebene 66 verläuft senkrecht zu den Ebenen 56 und 56' und senkrecht zur ersten Strahlverschieberachse 48. Der Signalpfad 42b der Signalquelle 36b verläuft in einer Ebene 66' mit dem Signalpfad der Signalquelle 36c. Die Ebene 66' verläuft senkrecht zu den Ebenen 56 und 56', senkrecht zur ersten Strahlverschieberachse 48 und parallel zur Ebene 66.

Die Abstände der Ausgangsseiten der Signalquellen 36c und 36d zu dem Fenster 44 der Strahlverschiebers 38 in dessen Neutralstellung entsprechen den Abständen 58 der Ausgangsseiten der Signalquellen 36a und 36b zu dem Fenster 44. Die Ausgänge der Signalquellen 36a, 36b, 36c und 36d sind in der Ebene 57 angeordnet.

Bei dem in der Figur 7 gezeigten Ausführungsbeispiel werden die Signalquellen 36a, 36b, 36c und 36d nacheinander aktiviert. Vor der jeweiligen Aktivierung wird das Fenster 44 des Strahlverschiebers 38 in entsprechende Position gekippt, sodass der Signalpfad 42a, 42b, 42c oder 42d der jeweils aktivierten Signalquelle 36a, 36b, 36c oder 36d hinter dem Strahlverschieber 38 auf dem Haupt-Signalpfad 34 liegt.

Vor Aktivierung der Signalquelle 36a wird das Fenster 44in seine Neutralstellung gebracht. Anschließend wird mit der Signalquelle 36a, wie in der Figur 7 links gezeigt, ein Abtastsignal 30 erzeugt.

Danach wird das Fenster 44 um die zweite Strahlverschieberachse 50 um den Kippwinkel Θ gekippt. Anschließend wird, wie in der Figur 7 in der zweiten Darstellung von links, die Signalquelle 36b zur Aussendung eines Abtastsignals 30 aktiviert.

Dann wird das Fenster 44 um die erste Strahlverschieberachse 48 um einen zweiten, in den Figuren nicht gezeigten, zweiten Kippwinkel geschwenkt. Anschließend wird, wie in der Figur 7 in der dritten Darstellung von links gezeigt, die Signalquelle 36c zur Aussendung eines Abtastsignals 30 aktiviert.

Daraufhin wird das Fenster 44 um die zweite Strahlverschieberachse 50 um den ersten Kippwinkel Θ zurück geschwenkt. Anschließend wird, wie in der Figur 7 rechts gezeigt, die Signalquelle 36d zur Aussendung eines Abtastsignals 30 aktiviert.

Am Ende des Zyklus wird das Fenster 44 um die zweite Strahlverschieberachse 50 um den zweiten Kippwinkel in seine Neutralstellung zurückgeschwenkt. Danach kann ein weiterer Zyklus beginnend mit dem Aktivieren der Signalquelle 36a zur Aussendung eines Abtastsignals 30 durchgeführt werden.

Durch die Verwendung von vier Signalquellen 36a, 36b, 36c und 36d wird die Messfrequenz des LiDAR-Systems 12 gegenüber der Verwendung von zwei Signalquellen 36a und 36b weiter erhöht. Dadurch wird die Leistungsfähigkeit des LiDAR-Systems 12 weiter verbessert.

## Patentansprüche

1. Sendeeinrichtung (22) einer Detektionsvorrichtung (12) zur Erfassung von Objekten (18) mittels elektromagnetischer Abtastsignale (30), mit wenigstens einer Signalquelle (36) zur Erzeugung von elektromagnetischen Abtastsignalen (30) und mit wenigstens einem Strahlverschieber (38) zum Verschieben von Signalpfaden (42) von elektromagnetischen Abtastsignalen (30),
wobei die Sendeeinrichtung (22) wenigstens zwei Signalquellen (36) aufweist, welche zum Erzeugen von elektromagnetischen Abtastsignalen (30) individuell angesteuert werden können,
wenigstens ein Strahlverschieber (38) zwischen wenigstens zwei Verschiebezuständen (I, II) umstellbar ist, wobei die Verschiebezustände (I, II) unterschiedlichen Signalquellen (36) zugeordnet sind,
und wobei die Signalpfade (42) von den wenigstens zwei Signalquellen (36) am Ausgang des wenigstens einen Strahlverschiebers (38) in den Verschiebezuständen (I, II), welche den Signalquellen (36) jeweils zugeordnet sind, auf einem gemeinsamen Haupt-Signalpfad (34) der Sendeeinrichtung (22) liegen;
**dadurch gekennzeichnet, dass**
wenigstens ein Strahlverschieberelement (44) des wenigstens einen Strahlverschiebers (38) zur Einstellung von Verschiebezuständen (I, II) um wenigstens eine Strahlverschieberachse (48, 50) kippbar ist.

2. Sendeeinrichtung nach Anspruch 1, **dadurch gekennzeichnet, dass**
das wenigstens eine Strahlverschieberelement (44) des wenigstens einen Strahlverschiebers (38) zur Einstellung von Verschiebezuständen (I, II) um zwei insbesondere zueinander orthogonale Strahlverschieberachsen (48, 50) kippbar ist.

3. Sendeeinrichtung nach Anspruch 1 oder 2, **dadurch gekennzeichnet, dass** wenigstens ein Strahlverschieber (38) wenigstens ein für die elektromagnetischen Abtastsignale (30) wenigstens teilweise durchlässiges Strahlverschieberelement (44) aufweist.

4. Sendeeinrichtung nach Anspruch 1 oder 2, **dadurch gekennzeichnet, dass** wenigstens ein Strahlverschieber (38) wenigstens ein für die elektromagnetischen Abtastsignale (30) wenigstens teilweise reflektierendes Strahlverschieberelement (44) aufweist.

5. Sendeeinrichtung nach einem der vorigen Ansprüche, **dadurch gekennzeichnet, dass** die Sendeeinrichtung (22) wenigstens eine Steuereinrichtung (39) aufweist, mit welcher der wenigstens eine Strahlverschieber (38) und/oder die wenigstens zwei Signalquellen (36) steuerbar sind.

6. Sendeeinrichtung nach einem der vorigen Ansprüche, **dadurch gekennzeichnet, dass** wenigstens eine Steuereinrichtung (39) der Sendeeinrichtung (22) Mittel aufweist, mit denen der wenigstens eine Strahlverschieber (38) und die wenigstens zwei Signalquellen (36) aufeinander abgestimmt gesteuert werden können.

7. Sendeeinrichtung nach einem der vorigen Ansprüche, **dadurch gekennzeichnet, dass** die Signalpfade (42) der wenigstens zwei Signalquellen (36) in Ausbreitungsrichtung der Abtastsignale (30) vor dem wenigstens einen Strahlverschieber (38) zueinander parallel verlaufen.

8. Sendeeinrichtung nach einem der vorigen Ansprüche, **dadurch gekennzeichnet, dass** in dem Haupt-Signalpfad (34) wenigstens ein optisches System (40) angeordnet ist.

9. Sendeeinrichtung nach einem der vorigen Ansprüche, **dadurch gekennzeichnet, dass** bei einer Anordnung von wenigstens drei Signalquellen (36) die Signalpfade (42) von benachbarten Signalquellen (36) jeweils im gleichen Abstand (Δs) verlaufen.

10. Sendeeinrichtung nach einem der vorigen Ansprüche, **dadurch gekennzeichnet, dass**
die Signalpfade (42) von wenigstens zwei Signalquellen (36) in einer Ebene (56, 56', 66, 66') verlaufen, die sich senkrecht zu einer Strahlverschieberachse (48, 50) erstreckt, um die das wenigstens eine Strahlverschieberelement (44) des wenigstens einen Strahlverschiebers (38) kippbar ist.

11. Sendeeinrichtung nach einem der Ansprüche 1 - 9, **dadurch gekennzeichnet, dass**
die Signalpfade (42) von wenigstens zwei Signalquellen (36) in einer Ebene (56, 56', 66, 66') verlaufen, die sich parallel zu einer Strahlverschieberachse (48, 50) erstreckt, um die das wenigstens eine Strahlverschieberelement (44) des wenigstens einen Strahlverschiebers (38) kippbar ist.

12. Sendeeinrichtung nach einem der vorigen Ansprüche, **dadurch gekennzeichnet, dass** die Sendeeinrichtung (22) wenigstens eine Abtastsignal-Umlenkeinrichtung (24) aufweist, welche in dem Haupt-Signalpfad (34) des wenigstens einen Strahlverschiebers (38) angeordnet ist.

13. Sendeeinrichtung nach einem der vorigen Ansprüche, **dadurch gekennzeichnet, dass** mehrere Strahlverschieber kaskadenartig hintereinander angeordnet sind.

14. Detektionsvorrichtung (12) zur Erfassung von Objekten (18) mittels elektromagnetischer Abtastsignale (30), mit wenigstens einer Sendeeinrichtung (22) gemäß Anspruch 1.

15. Fahrzeug (10) mit wenigstens einer Detektionsvorrichtung (12) zur Erfassung von Objekten (18) mittels elektromagnetischer Abtastsignale (30), mit wenigstens einer Sendeeinrichtung (22) gemäß Anspruch 1.

16. Verfahren zum Betreiben einer Sendeeinrichtung (22) einer Detektionsvorrichtung (12) zur Erfassung von Objekten (18) mittels elektromagnetischer Abtastsignale (30), bei dem mit wenigstens einer Signalquelle (36) elektromagnetische Abtastsignale (30) erzeugt werden und mit wenigstens einem Strahlverschieber (38) ein Signalpfad (42) wenigstens eines elektromagnetischen Abtastsignals (30) verschoben wird,
wobei wenigstens zwei Signalquellen (36) zum Erzeugen von elektromagnetischen Abtastsignalen (30) individuell angesteuert werden,
wobei wenigstens ein Strahlverschieber (38) auf einen von wenigstens zwei Verschiebezuständen (I, II) eingestellt wird, welcher der jeweils wenigstens einen aktiven Signalquelle (36) zugeordnet ist,
und wobei der Signalpfad (42) der jeweils wenigstens einen aktiven Signalquelle (36) am Ausgang des wenigstens einen Strahlverschiebers (38) in dem jeweiligen Verschiebezustand (I, II), welcher der wenigstens einen aktiven Signalquelle (36) jeweils zugeordnet ist, auf einen gemeinsamen Haupt-Signalpfad (34) für die wenigstens zwei Signalquellen (36) verschoben wird
**dadurch gekennzeichnet, dass**
wenigstens ein Strahlverschieberelement (44) des wenigstens einen Strahlverschiebers (38) zur Einstellung von Verschiebezuständen (I, II) um wenigstens eine Strahlverschieberachse (48, 50) gekippt wird.

## Claims

1. Transmitting device (22) of a detection device (12) for detecting objects (18) by means of electromagnetic scanning signals (30), with at least one signal source (36) for generating electromagnetic scanning signals (30) and with at least one beam shifter (38) for shifting signal paths (42) of electromagnetic scanning signals (30), wherein the transmitting device (22) has at least two signal sources (36) which can be individually controlled to generate electromagnetic scanning signals (30), at least one beam shifter (38) is switchable between at least two shifting states (I, II), wherein the shifting states (I, II) are assigned to different signal sources (36), and wherein the signal paths (42) from the at least two signal sources (36) at the output of the at least one beam shifter (38) in the shifting states (I, II), which are respectively assigned to the signal sources (36), lie on a common main signal path (34) of the transmitting device (22); **characterized in that** at least one beam shifting element (44) of the at least one beam shifter (38) is tiltable about at least one beam shifting axis (48, 50) for setting shifting states (I, II).

2. Transmitting device according to claim 1, **characterized in that** the at least one beam shifting element (44) of the at least one beam shifter (38) is tiltable about two, in particular mutually orthogonal, beam shifting axes (48, 50) for setting shifting states (I, II).

3. Transmitting device according to claim 1 or 2, **characterized in that** at least one beam shifter (38) has at least one beam shifting element (44) that is at least partially transparent to the electromagnetic scanning signals (30).

4. Transmitting device according to claim 1 or 2, **characterized in that** at least one beam shifter (38) has at least one beam shifting element (44) that at least partially reflects the electromagnetic scanning signals (30).

5. Transmitting device according to one of the preceding claims, **characterized in that** the transmitting device (22) has at least one control device (39) with which the at least one beam shifter (38) and/or the at least two signal sources (36) can be controlled.

6. Transmitting device according to one of the preceding claims, **characterized in that** at least one control device (39) of the transmitting device (22) has means with which the at least one beam shifter (38) and the at least two signal sources (36) can be controlled in a coordinated manner.

7. Transmitting device according to one of the preceding claims, **characterized in that** the signal paths (42) of the at least two signal sources (36) run parallel to each other in the propagation direction of the scanning signals (30) before the at least one beam shifter (38).

8. Transmitting device according to one of the preceding claims, **characterized in that** at least one optical system (40) is arranged in the main signal path (34).

9. Transmitting device according to one of the preceding claims, **characterized in that** with an arrangement of at least three signal sources (36), the signal paths (42) of adjacent signal sources (36) each run at the same distance (As).

10. Transmitting device according to one of the preceding claims, **characterized in that** the signal paths (42) of at least two signal sources (36) run in a plane (56, 56', 66, 66') that extends perpendicular to a beam shifting axis (48, 50) about which the at least one beam shifting element (44) of the at least one beam shifter (38) is tiltable.

11. Transmitting device according to one of claims 1 - 9, **characterized in that** the signal paths (42) of at least two signal sources (36) run in a plane (56, 56', 66, 66') that extends parallel to a beam shifting axis (48, 50) about which the at least one beam shifting element (44) of the at least one beam shifter (38) is tiltable.

12. Transmitting device according to one of the preceding claims, **characterized in that** the transmitting device (22) has at least one scanning signal deflection device (24) which is arranged in the main signal path (34) of the at least one beam shifter (38).

13. Transmitting device according to one of the preceding claims, **characterized in that** multiple beam shifters are arranged in cascade one after the other.

14. Detection device (12) for detecting objects (18) by means of electromagnetic scanning signals (30), with at least one transmitting device (22) according to claim 1.

15. Vehicle (10) with at least one detection device (12) for detecting objects (18) by means of electromagnetic scanning signals (30), with at least one transmitting device (22) according to claim 1.

16. Method for operating a transmitting device (22) of a detection device (12) for detecting objects (18) by means of electromagnetic scanning signals (30), in which electromagnetic scanning signals (30) are generated with at least one signal source (36) and a signal path (42) of at least one electromagnetic scanning signal (30) is shifted with at least one beam shifter (38), wherein at least two signal sources (36) are individually controlled to generate electromagnetic scanning signals (30), wherein at least one beam shifter (38) is set to one of at least two shifting states (I, II), which is assigned to the respective at least one active signal source (36), and wherein the signal path (42) of the respective at least one active signal source (36) at the output of the at least one beam shifter (38) in the respective shifting state (I, II), which is assigned to the at least one active signal source (36), is shifted to a common main signal path (34) for the at least two signal sources (36), **characterized in that** at least one beam shifting element (44) of the at least one beam shifter (38) is tilted about at least one beam shifting axis (48, 50) for setting shifting states (I, II).

## Revendications

1. Dispositif d'émission (22) d'un appareil de détection (12) pour la détection d'objets (18) au moyen de signaux de balayage électromagnétiques (30), comprenant au moins une source de signal (36) pour générer des signaux de balayage électromagnétiques (30) et au moins un déflecteur de faisceau (38) pour déplacer des trajets de signal (42) de signaux de balayage électromagnétiques (30), le dispositif d'émission (22) comprenant au moins deux sources de signal (36) qui peuvent être commandées individuellement pour générer des signaux de balayage électromagnétiques (30), au moins un déflecteur de faisceau (38) pouvant être commuté entre au moins deux états de déplacement (I, II), les états de déplacement (I, II) étant associés à différentes sources de signal (36), et les trajets de signal (42) des au moins deux sources de signal (36) à la sortie de l'au moins un déflecteur de faisceau (38) dans les états de déplacement (I, II), qui sont respectivement associés aux sources de signal (36), se trouvant sur un trajet de signal principal commun (34) du dispositif d'émission (22) ; **caractérisé en ce qu'**au moins un élément déflecteur de faisceau (44) de l'au moins un déflecteur de faisceau (38) peut être incliné autour d'au moins un axe de déflexion de faisceau (48, 50) pour régler les états de déplacement (I, II).

2. Dispositif d'émission selon la revendication 1, **caractérisé en ce que** l'au moins un élément déflecteur de faisceau (44) de l'au moins un déflecteur de faisceau (38) peut être incliné autour de deux axes de déflexion de faisceau (48, 50) notamment orthogonaux l'un par rapport à l'autre pour régler les états de déplacement (I, II).

3. Dispositif d'émission selon la revendication 1 ou 2, **caractérisé en ce qu'**au moins un déflecteur de faisceau (38) comprend au moins un élément déflecteur de faisceau (44) au moins partiellement transparent pour les signaux de balayage électromagnétiques (30).

4. Dispositif d'émission selon la revendication 1 ou 2, **caractérisé en ce qu'**au moins un déflecteur de faisceau (38) comprend au moins un élément déflecteur de faisceau (44) au moins partiellement réfléchissant pour les signaux de balayage électromagnétiques (30).

5. Dispositif d'émission selon l'une des revendications précédentes, **caractérisé en ce que** le dispositif d'émission (22) comprend au moins un dispositif de commande (39) avec lequel l'au moins un déflecteur de faisceau (38) et/ou les au moins deux sources de signal (36) peuvent être commandés.

6. Dispositif d'émission selon l'une des revendications précédentes, **caractérisé en ce qu'**au moins un dispositif de commande (39) du dispositif d'émission (22) comprend des moyens avec lesquels l'au moins un déflecteur de faisceau (38) et les au moins deux sources de signal (36) peuvent être commandés de manière coordonnée.

7. Dispositif d'émission selon l'une des revendications précédentes, **caractérisé en ce que** les trajets de signal (42) des au moins deux sources de signal (36) sont parallèles les uns aux autres dans la direction de propagation des signaux de balayage (30) avant l'au moins un déflecteur de faisceau (38).

8. Dispositif d'émission selon l'une des revendications précédentes, **caractérisé en ce qu'**au moins un système optique (40) est disposé dans le trajet de signal principal (34).

9. Dispositif d'émission selon l'une des revendications précédentes, **caractérisé en ce que**, dans un arrangement d'au moins trois sources de signal (36), les trajets de signal (42) des sources de signal (36) adjacentes s'étendent chacun à la même distance (As).

10. Dispositif d'émission selon l'une des revendications précédentes, **caractérisé en ce que** les trajets de signal (42) d'au moins deux sources de signal (36) s'étendent dans un plan (56, 56', 66, 66') qui s'étend perpendiculairement à un axe de déflexion de faisceau (48, 50) autour duquel l'au moins un élément déflecteur de faisceau (44) de l'au moins un déflecteur de faisceau (38) peut être incliné.

11. Dispositif d'émission selon l'une des revendications 1 à 9, **caractérisé en ce que** les trajets de signal (42) d'au moins deux sources de signal (36) s'étendent dans un plan (56, 56', 66, 66') qui s'étend parallèlement à un axe de déflexion de faisceau (48, 50) autour duquel l'au moins un élément déflecteur de faisceau (44) de l'au moins un déflecteur de faisceau (38) peut être incliné.

12. Dispositif d'émission selon l'une des revendications précédentes, **caractérisé en ce que** le dispositif d'émission (22) comprend au moins un dispositif de déviation de signal de balayage (24) qui est disposé dans le trajet de signal principal (34) de l'au moins un déflecteur de faisceau (38).

13. Dispositif d'émission selon l'une des revendications précédentes, **caractérisé en ce que** plusieurs déflecteurs de faisceau sont disposés en cascade les uns derrière les autres.

14. Appareil de détection (12) pour la détection d'objets (18) au moyen de signaux de balayage électromagnétiques (30), comprenant au moins un dispositif d'émission (22) selon la revendication 1.

15. Véhicule (10) comprenant au moins un appareil de détection (12) pour la détection d'objets (18) au moyen de signaux de balayage électromagnétiques (30), comprenant au moins un dispositif d'émission (22) selon la revendication 1.

16. Procédé de fonctionnement d'un dispositif d'émission (22) d'un appareil de détection (12) pour la détection d'objets (18) au moyen de signaux de balayage électromagnétiques (30), dans lequel des signaux de balayage électromagnétiques (30) sont générés avec au moins une source de signal (36) et un trajet de signal (42) d'au moins un signal de balayage électromagnétique (30) est déplacé avec au moins un déflecteur de faisceau (38), au moins deux sources de signal (36) étant commandées individuellement pour générer des signaux de balayage électromagnétiques (30), au moins un déflecteur de faisceau (38) étant réglé sur l'un d'au moins deux états de déplacement (I, II), qui est associé à la au moins une source de signal active (36) respective, et le trajet de signal (42) de la au moins une source de signal active (36) respective à la sortie de l'au moins un déflecteur de faisceau (38) dans l'état de déplacement respectif (I, II), qui est respectivement associé à la au moins une source de signal active (36), étant déplacé sur un trajet de signal principal commun (34) pour les au moins deux sources de signal (36), **caractérisé en ce qu'**au moins un élément déflecteur de faisceau (44) de l'au moins un déflecteur de faisceau (38) est incliné autour d'au moins un axe de déflexion de faisceau (48, 50) pour régler les états de déplacement (I, II).
